# EUROPEAN PATENT APPLICATION

(11) **EP 1 156 423 A2**
(43) Date of publication of application: **21.11.2001**
(21) Application number: 01304232.0
(22) Date of filing: 11.05.2001
(51) Int. Cl.: G06F 13/28, G06F 13/42, G06F 13/40, H04L 29/06

(54) **Information processing apparatus, information processing method and bridge utilizing the same**

(30) Priority: 16.05.2000 JP 2000143638
(71) Applicant: SONY CORPORATION, Tokyo 141 (JP)
(72) Inventor: Niwa, Yoshikatsu, Shinagawa-ku, Tokyo 141 (JP); Akai, Takashi, Shinagawa-ku, Tokyo 141 (JP); Masunaga, Shinya, Shinagawa-ku, Tokyo 141 (JP)
(74) Representative: DeVile, Jonathan Mark, Dr.

(57) **Abstract**

Improving the efficiency of processing isochronous data in isochronous transmission by use of a 1394-brigde. A forward stream bit of an isochronous reception context control register of a 1394OHIC unit 124a is set at 1 to thereby provide a common format such that each isochronous channel of reception data stored in a memory 112 may have the same header information as transmission data A CPU 111 confirms that the forward stream bit of an isochronous transmission context control register of a 1394OHCI124b has been set at 1 and then prepares each isochronous channel of transmission data without treating the data only by deleting information necessary only at the time of reception (i.e., time information and information indicating a reception state) from each channel of data to be transmitted stored in the memory 112.

## Description

The present invention relates to information processing apparatus, operable to control a plurality of channels of data.

There is known the IEEE1394-1995 High Performance Serial Bus Standard (hereinafter abbreviated as IEEE1394 Standard) as an interface standard for supporting high-speed data transmission and real-time transfer aimed at interface for multi-media data transmission.

The IEEE1394 Standard provides for data transfer rates of 100Mbps (98.304Mbps), 200Mbps (196.608Mbps), and 400Mbps (393.216Mbps), specifying that a 1394-port with a high-order transfer rate should have compatibility with its lower-order rates. Accordingly, the data transfer rates of 100Mbps, 200Mbps, and 400Mbps can be present in a mixed manner on the same network.

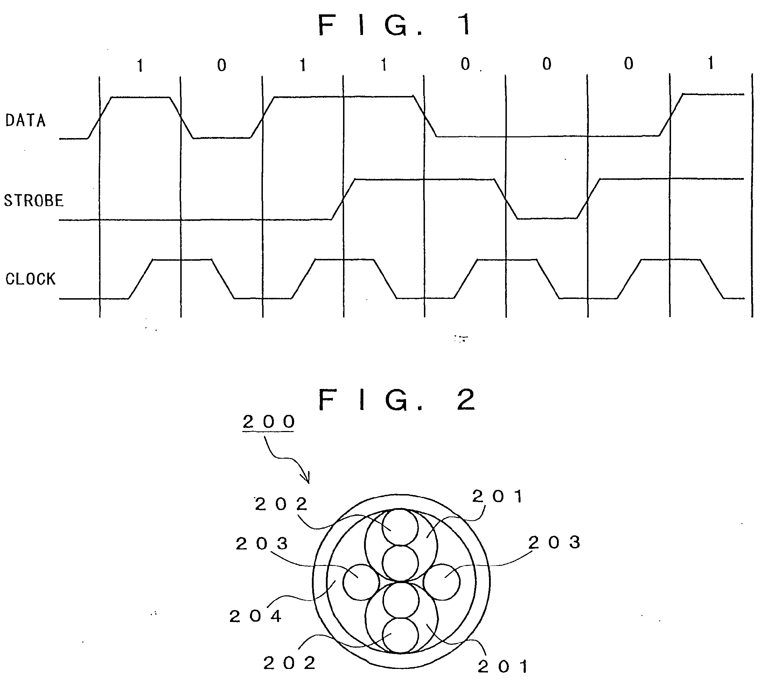

Also, the IEEE1394 Standard employs a transfer format of the Data/Strobe Link (DS-Link) coding system, whereby, as shown in Fig. 1, a transfer data piece is converted into two signals of a data signal and its complementary strobe signal, which signals are Exclusive-OR-tied to thereby generate a clock signal. Also, the IEEE1394 standard provides for a cable 200 having such a cable construction shown in a cross-sectional view of Fig. 2 that two twisted-pair wires (signal wires) 202 each shielded by a first shielding layer 201 and a power source wire 203 are bundled into one cable the whole of which is in turn shielded by a second shielding layer 204.

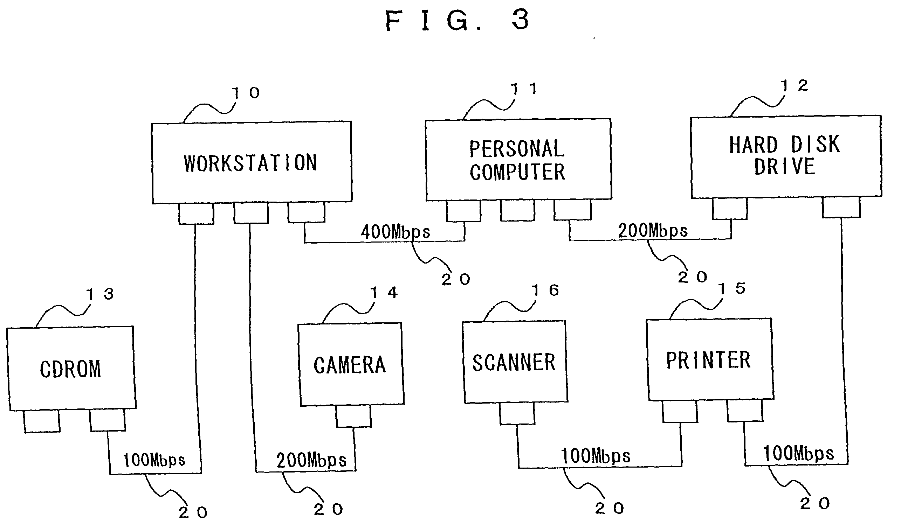

Fig. 3 shows a configuration network example which employs the IEEE1394 Standard. A workstation 10, a personal computer 11, a hard disk drive 12, a CD-ROM drive 13, a camera 14, a printer 15, and a scanner 16 are all IEEE1394 nodes and interconnected by an IEEE1394 bus 20 in use. The connection system by the IEEE1394 Standard comes in either of the two systems of a daisy chain system and a node branch system. By the daisy chain system, up to 16 nodes (each of which is an apparatus having a 1394-port) can be interconnected, with the maximum distance therebetween being 4.5 m. As shown in Fig. 3, node branches can be shared in use to thereby interconnect up to the maximum number of 63 nodes according to the standard.

Also, by the IEEE1394 Standard, a cable having the above-mentioned construction can be connected and disconnected while the relevant apparatus is operating, that is, in a state where the power source is in an ON state, so that when a new node is added or the existing node is deleted, the 1394-network can be reconfigured. At the same time, the apparatus to which the node was connected can be recognized automatically, thus managing the ID and the arrangement of this apparatus on the interface.

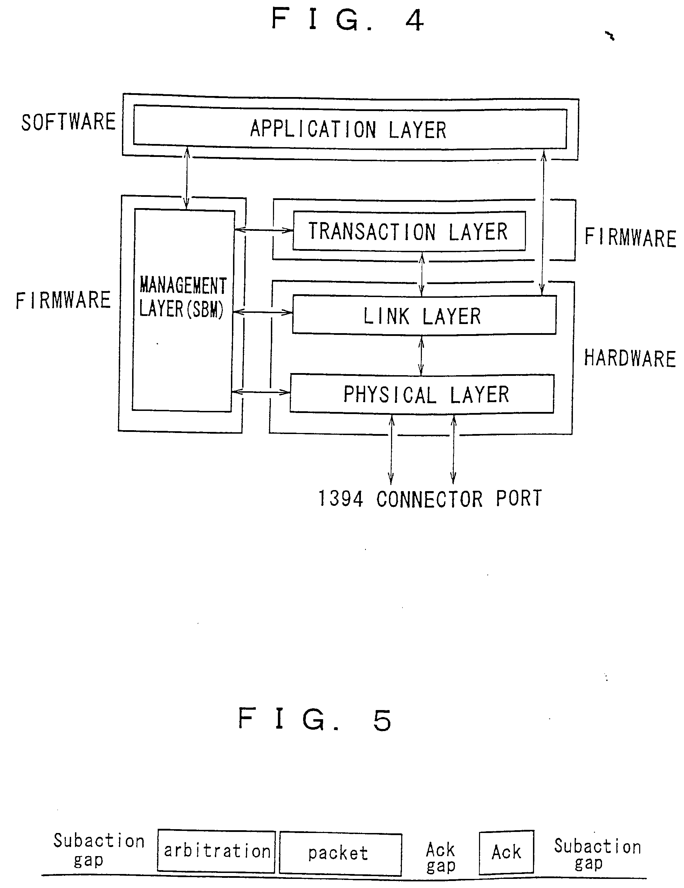

Fig. 4 shows components and a protocol architecture of an interface in accordance with this IEEE1394 Standard. The IEEE1394 interface can be divided into hardware and firmware.

The hardware comprises a physical layer (PHY) and a link layer (Link). The physical layer is used to directly drive an IEEE1394-Standard signal. The link layer is provided with a host interface and an interface with the physical layer.

The firmware comprises a transaction layer made up by a managing driver for performing actual operations on an interface which conforms to the IEEE 1394 and a management layer made up of an IEEE1394-Standard network-managing driver called a serial bus management (SBM).

Also, the relevant application layer comprises software used by the user and managing software for interfacing the transaction layer, the management layer, etc.

The IEEE1394 Standard refers to a transfer operation performed on the network as a subaction, providing for the following two kinds of subactions. That is, for the two subactions, two modes are defined: an asynchronous transfer mode called "asynchronous" mode and a real-time transfer mode called "isochronous" mode, by which a transfer band is secured. Also, each of the two subactions is divided into the following three parts of transfer state:
(1) arbitration;
(2) packet transmission; and
(3) acknowledgement Note here that "acknowledgement" is omitted in the "isochronous" mode.

An asynchronous subaction is used to perform asynchronous transfer. In Fig. 5 for showing a time-wise transition state in this transfer mode, the first subaction gap indicates a bus idling state. By monitoring this subaction gap, the previous transfer is terminated to decide whether new transfer is possible.

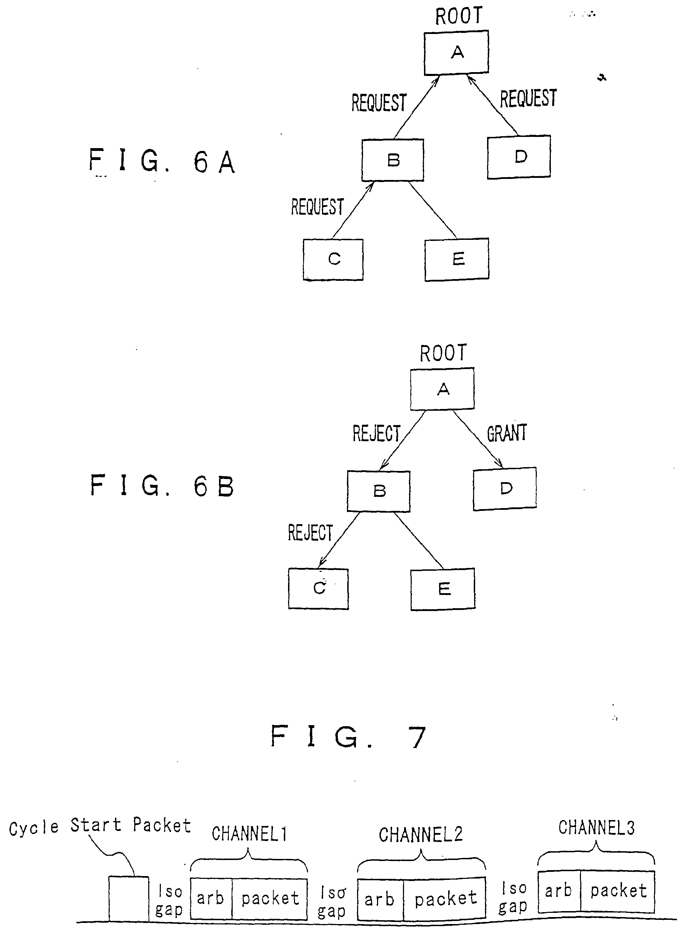

If the idling state lasts for a predetermined time lapse or longer, a node that demands transfer decides that it can use the bus, thus performing arbitration in order to acquire bus control. Actually, whether the bus is stopped is decided by a node A positioned in a root as shown in Figs. 6A and 6B. The node, after acquiring bus control by this arbitration, then performs data transfer, i.e. packet transmission. A node that received this transfer data performs acknowledgement in responding to the reception of that transferred data by returning a reception acknowledging return code (ack) corresponding to that reception result. When this acknowledgment is performed, both the transmission and reception nodes can confirm normal transfer based on the contents of the above-mentioned ack.

Then, the process returns to a subaction gap state, that is, bus idling state for repeating the above-mentioned transfer.

Also, an isochronous subaction, by which basically the same construction of transfer as that of asynchronous transfer is performed, is preferentially performed over asynchronous transfer by an asynchronous subaction as shown in Fig. 7. This isochronous transfer by an isochronous subaction is performed following a cycle start packet issued from a root node for each 8kHz (125 *µ* s) approximately, preferentially over asynchronous transfer by an asynchronous subaction. This provides a transfer mode securing a transfer band, thus realizing the transfer of real-time data.

If a plurality of nodes performs isochronous transfer of real-time data simultaneously, the transfer data is given a preset channel ID for identifying the contents (transmission node) so that only necessary real-time data may be received.

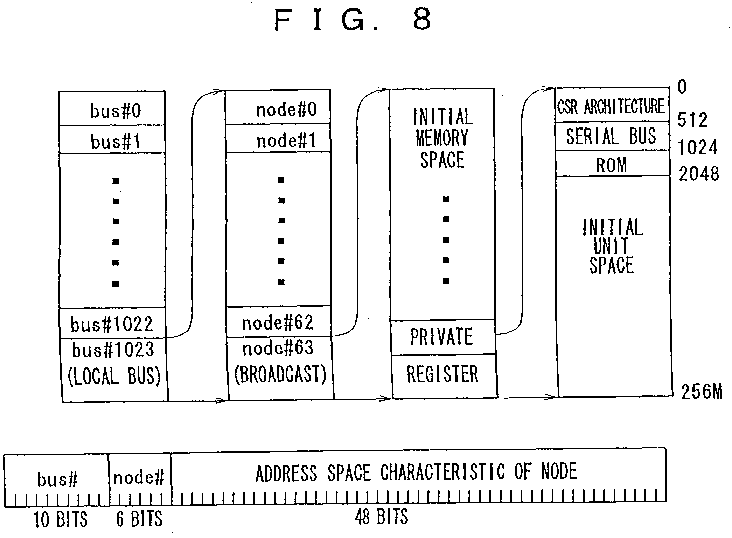

An IEEE1394-Standard address space has such a configuration as shown in Fig. 8. This configuration is in accordance with a CSR architecture defined by the ISO/IEC13213 Standard for 64-bit fixed addressing (hereinafter abbreviated as CSR architecture). As shown in the Figure, high-order 16 bits of each address indicates a node ID, providing a node with an address space. The node ID is divided into a 10-bit bus number and a 6-bit node number so that the high-order 10 bits may specify a bus ID and the low-order six bits may specify a physical ID (node ID in a narrow sense). For both the bus ID and the physical ID, a value obtained when all of the bits are 1 is used for a special purpose, so that this addressing system offers 1023 buses and 63 nodes each capable of separate addressing.

Among the address space with 256 terabyte defined by the lower 48 bits, the space defined by the upper 20 bits is divided into an initial register space which is used for the register specific to 2048 byte CSR and the register specific to the IEEE 1394 standard, a private space, and an initial memory space. The space defined by the lower 28 bits is used, when the space defined by the upper 20 bits is an initial register space, as a configuration read only memory (ROM), an initial unit space for use specific to the node, a plug control register (PCRs), or the like.

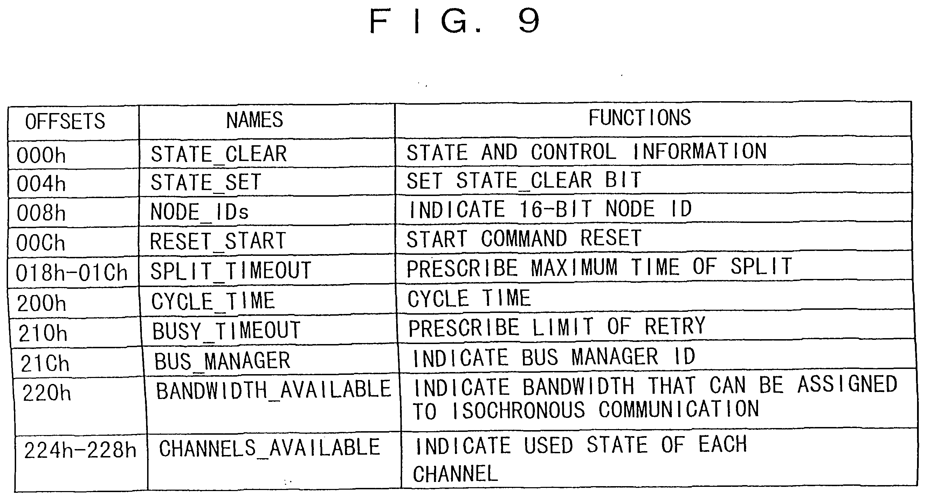

Fig. 9 is a diagram for illustrating an offset address, name, and operation of the main CSR. The term "offset" in Fig. 9 shows the offset address close to the FFFFF0000000h address (the h at the rearmost end indicates that the address is in a hexadecimal notation) from which the initial register space begins. The bandwidth available register having an offset 220h shows a bandwidth which can be allocated to the isochronous transfer, and recognizes only the value of the node activating as an isochronous resource manager to be effective.
Specifically, each node has the CSR shown in Fig. 8, whereas only the bandwidth available register of the isochronous resource manager is recognized to be effective. In other words, it is only the isochronous resource manager that actually has the bandwidth available register. In the bandwidth available register, a maximum value is stored when no bandwidth is allocated to the isochronous transfer, and the value thereof is reduced every time when a bandwidth is allocated to the isochronous transfer.

The channels available registers from offset 224h to 228h correspond to the channel numbers with 0 to 63 bits, respectively. In the case where the channel number with 0 bit, it means that the channel has been already allocated to the channels available register. Only the channel available register of the node activating as an isochronous resource manager is effective.

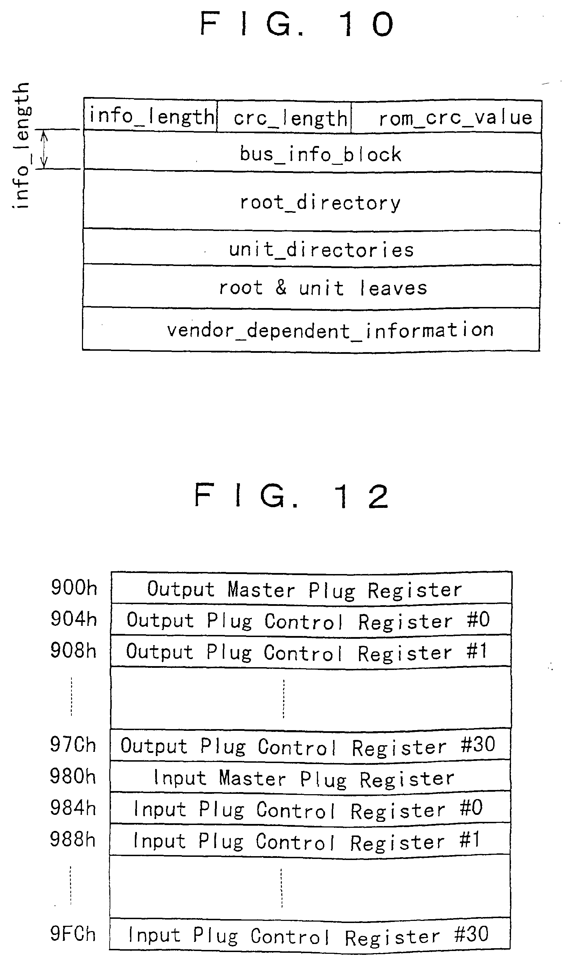

Referring again to Fig. 8, a configuration read only memory (ROM) based on the general read only memory (ROM) format is arranged in the addresses 200h to 400h within the initial register space. Fig. 10 is a diagram for illustrating the general ROM format. The node, which is a unit of access on the IEEE 1394 standard, can hold a plurality of units capable of independently operate while having the common address space in the node. The unit directories can indicate the version and the position of the software for the unit. The bus info block and the root directory are located at fixed positions, and the other blocks are located at positions designated by the offset address.

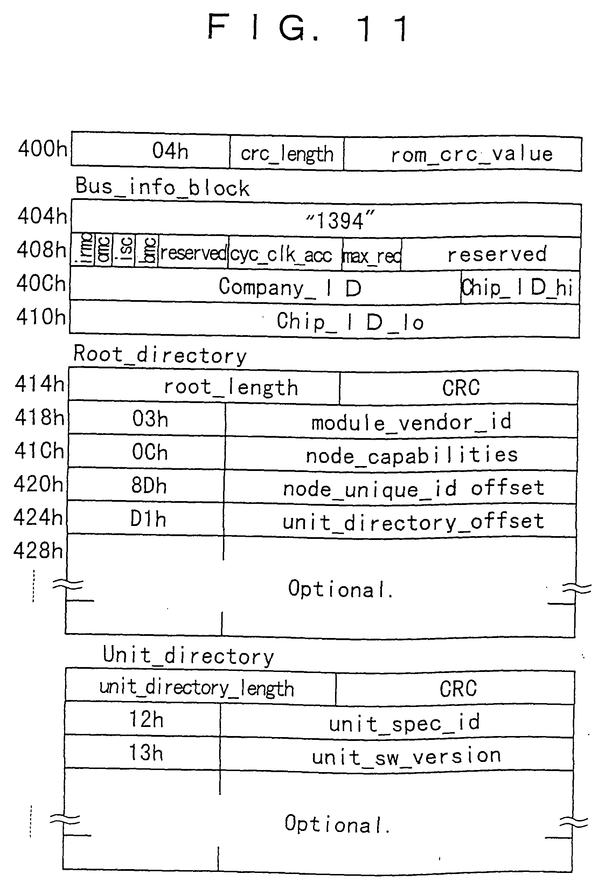

Fig. 11 is a diagram showing bus info block, root directory, and unit directory in detail. An ID number for indicating the manufacturer of the equipment is stored in the company ID in the bus info block. An ID which is specific to the equipment and is the only one ID in the world without overlapping other IDs is stored in the chip ID. 00h is written into the first octet of the unit spec ID of the unit directory of the equipment satisfying the requirements of the IEC 61883 standard, and Aoh is written into the second octet thereof, and 2Dh is written into the third octet thereof, respectively. Furthermore, 01h is written in the first octet of the unit switch version, and 1 is written into the least significant bit (LSB) of the third octet.

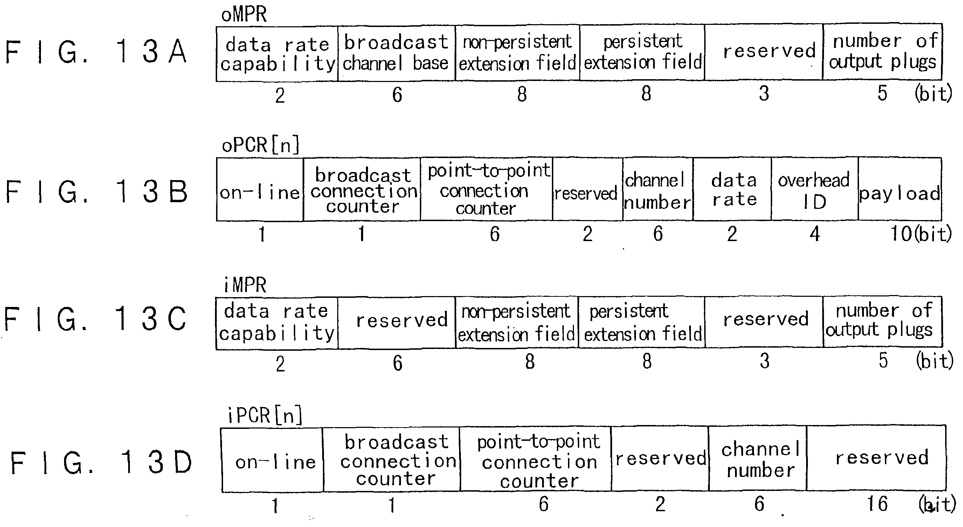

The node has a plug control register (PCR) defined by the IEC61883 standard in the addresses 900h to 9FFh within the initial unit space shown in Fig. 8, in order to control an input/output of the equipment via the interface. This design embodies the concept of plug to form a signal path logically similar to an analog interface. Fig. 12 is a diagram for illustrating the structure of PCR. The PCR has an output plug control register (oPCR) indicating an output plug, and an input plug control register (iPCR) indicating an input plug. The PCR also has an output master plug register (oMPR) or an input master plug register (iMPR) for indicating information on the output plug or the input plug specific to each device. Each device does not have a plurality of oMPR nor iMPR, but may have, in accordance with its ability, a plurality of oPCR or iPCR corresponding to each plug thereof. Each of the PCRs shown in Fig. 12 has 31 oPCRs and 31 iPCRs. The isochronous data flow is controlled by manipulating the registers corresponding to these plugs.

Figs. 13A to 13D are diagrams showing structures of oMPR, oPCR, iMPR, and iPCR, respectively. Fig. 13A shows the structure of oMPR, Fig. 13B shows the structure of oPCR, Fig. 13C shows the structure of iMPR, and Fig. 13D shows the structure of iPCR, respectively. A code indicating the maximum transmission rate of the isochronous data which the device can send or receive is stored in the data rate capability with 2 bits at the MSB side in each of the oMPR and iMPR. A broadcast channel base in the oMPR defines the channel number to be used for broadcast output.

The number of output plugs that the device has, that is, the value showing the number of oPCRs is stored in the number of output plugs with 5 bits at the LSB side in the oMPR. The number of input plugs that the device has, that is, the value showing the number of iPCR is stored in the number of input plugs with 5 bits at the LSB side in the iMPR. A non-persistent extension field and a persistent extension field are regions prepared for future expansion.

An on-line at the MSB in each of the oPCR and iPCR indicates the use state of the plug. Specifically, the value at 1 on the on-line means that the plug is in an on-line state, and the value at 0 on the on-line means that the plus is in an off-line state. The values on the broadcast connection counter of each of the oPCR and iPCR indicates the presence (the value at 1) or absence (the value at 0) of the broadcast connection. The value on the point-to-point connection counter with 6-bit width in each of the oPCR and iPCR indicates the number of the point-to-point connections that the plug has.

The value on the channel number with 6-bit width in each of the oPCR and iPCR indicates the isochronous channel number to which the plug is to be connected. The value on the data rate with 2-bit width in oPCR indicates an actual transmission rate of the packet of the isochronous data to be output from the plug. The code stored in the overhead ID with 4-bit width in the oPCR shows the bandwidth over the isochronous communication. The value on the payload with 10-bit width in the oPCR indicates the maximum value of the data involved in the isochronous packet that can be handled by the plug.

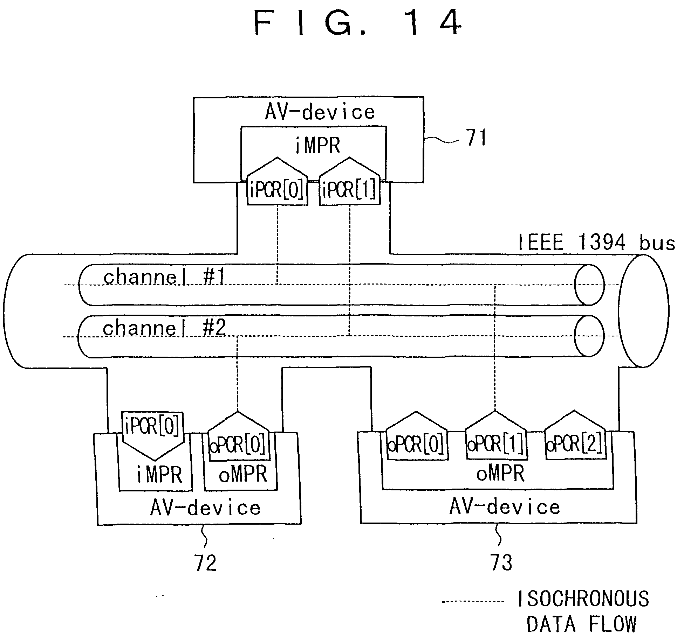

Fig. 14 is a diagram showing the relationship between the plug, the plug control register, and the isochronous channel. AV-devices 71 to 73 are connected with each other by IEEE 1394 serial bus. The oMPR in the AV device 73 defines the number and the transmission rate of the oPCR[0] to oPCR[2]. The isochronous data for which the channel is designated by the oPCR [1] among the oPCR [0] to oPCR[2] is sent to the channel #1 in the IEEE 1394 serial bus. The iMPR in the AV device 71 defines the number and transmission rate of iPCR[0] and iPCR[1]. The AV device 71 read the isochronous data which has been sent to the channel #1 in the IEEE 1394 serial bus which is designated by the iPCR[0] between the iPCR[0] and iPCR[1]. Similarly, the AV device 72 sends the isochronous data to the channel #2 designated by the oPCR[0]. The AV device 71 reads the isochronous data from the channel #2 designated by the iPCR[1].

In the aforementioned manner, data transmission is executed between the devices connected to each other by the IEEE 1394 serial bus. In this structure, each device can be controlled and the state thereof can be acknowledged by use of an AV/C command set defined as a command for controlling the devices connected to each other by the IEEE 1394 serial bus. Hereinafter, the AV/C command set will be described.

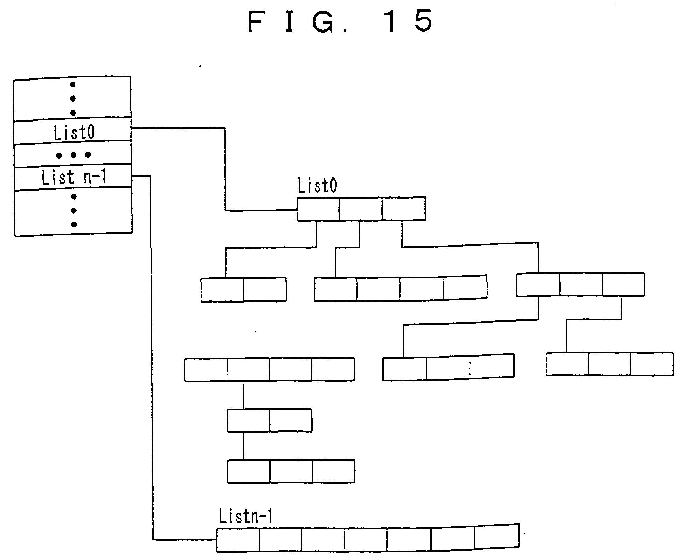

First, description will be made on a data structure of the subunit identifier descriptor in the AV/C command set, referring to Figs. 15 to 18. Fig. 15 is a diagram showing a data structure of the subunit identifier descriptor. As seen in Fig. 15, the data structure of the subunit identifier descriptor is constituted by hierarchical lists. The term "list" means, in the case of a tuner for example, a channel through which data can be received, and means, in the case of a disc for example, a music recorded therein. The uppermost list in the hierarchy is referred to as a root list, and a list 0 is a root for the lists at lower positions for example. Similarly, the lists 2 to (n-1) are also root lists. The root lists exist in the same numbers as of the objects. The term "object" means, in the case where the AV device is a tuner, each channel in a digital broadcasting. All the lists in one hierarchy share the same information.

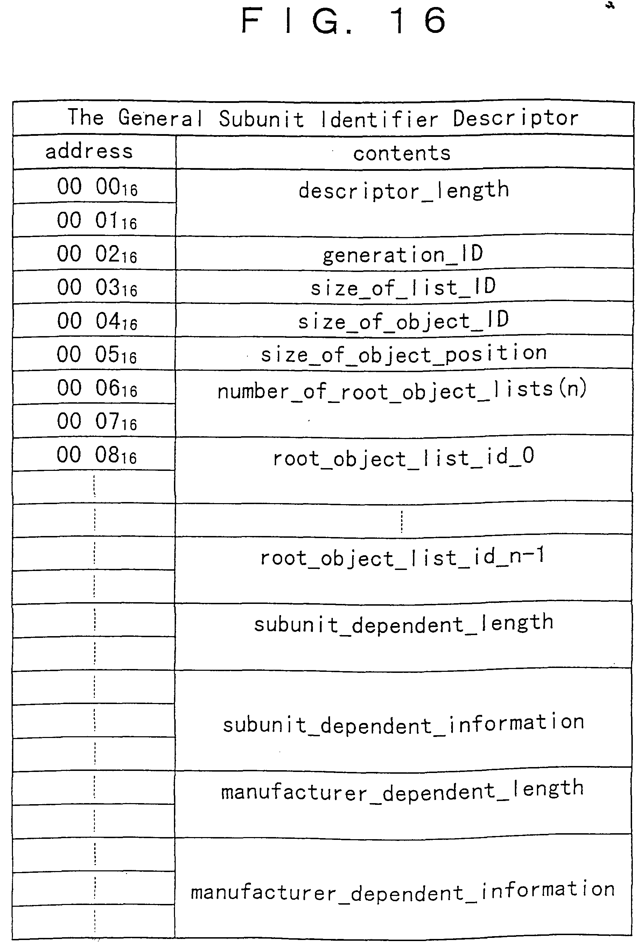

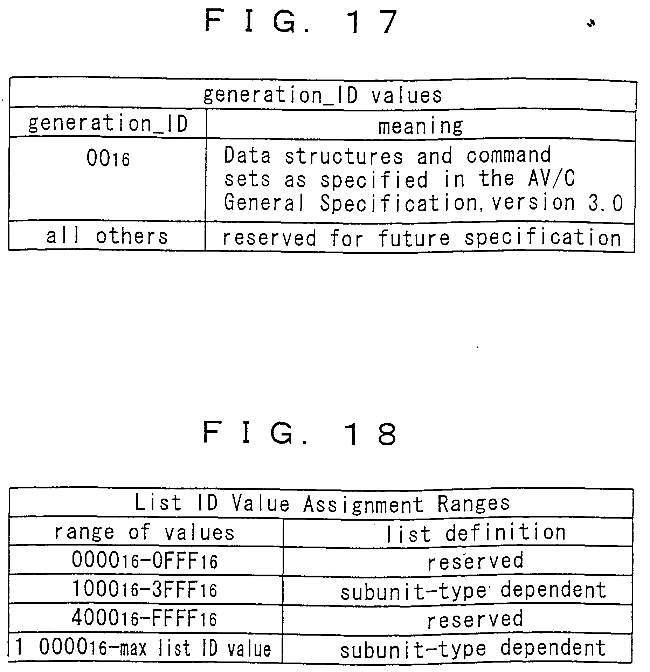

Fig. 16 is a diagram showing a format of the general subunit identifier descriptor. The subunit identifier descriptor 41 has contents including attribute information as to the functions. No value of the descriptor length field itself is involved in the contents. The generation ID indicates the AV/C command set version, and its value is at "00h" (the h designates that this value is in hexadecimal notation) at present as shown in Fig. 8. The value at "00h" means that the data structure and the command are of AV/C general specification, version 3.0. In addition, as shown in Fig. 17, all the values except for "00h" are stored in reserved states for future specification.

The size of list ID shows the number of bytes of the list ID. The size of object ID shows the number of bytes of the object ID. The size of object position shows the position (i.e. the number of bytes) in the lists to be referred in a control operation. The number of root object lists show the number of root object lists. The root object list ID shows an ID for identifying the uppermost root object list in the independent layers in the hierarchy.

The subunit dependent length means the number of bytes of the subsequent subunit dependent information field. The subunit dependent information is a field showing information specific to the functions. The manufacturer dependent length shows the number of bytes of the subsequent manufacturer dependent information field. The manufacturer dependent information is a field showing information about the specification determined by the vender (i.e. manufacturer). When the descriptor has no manufacturer dependent information, the manufacturer dependent information field does not exist.

Fig. 18 is a diagram showing the list ID assignment ranges shown in Fig. 16. As shown in Fig. 18, the values at "0000h to 0FFFh" and "4000n to FFFFh" are stored in reserved states for future specification. The values at "1000h to 3FFFh""and "10000h to max list ID value" are prepared for identifying dependent information about function type.

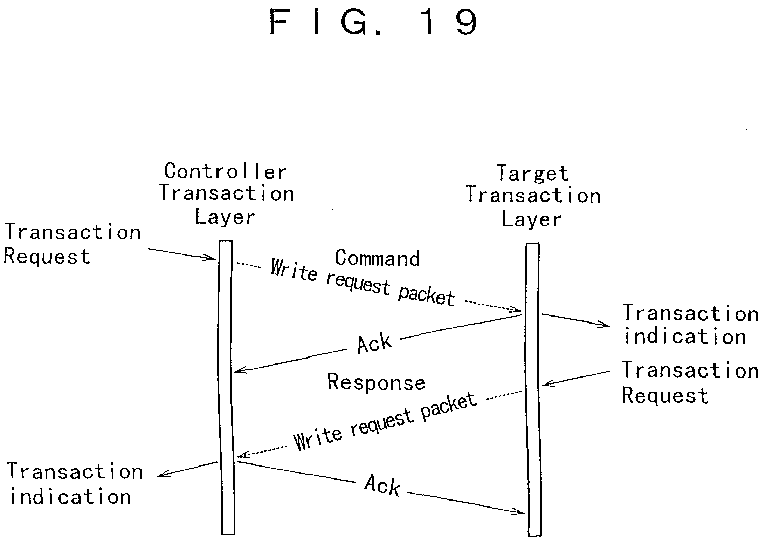

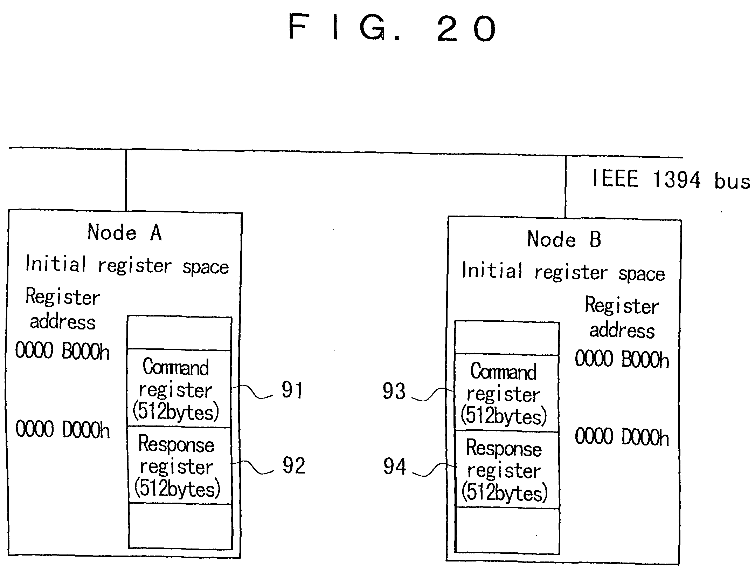

Next, the AV/C command set will be described with reference to Figs. 19 to 20. As shown in Fig. 20, a controller is a control side, and a target is a side to be controlled. The command is transmitted and received between nodes by use of the write transaction in the IEEE 1394 asynchronous transfer.. Upon receiving data from the controller, the target returns an acknowledgement to the controller for notifying that it has received the data.

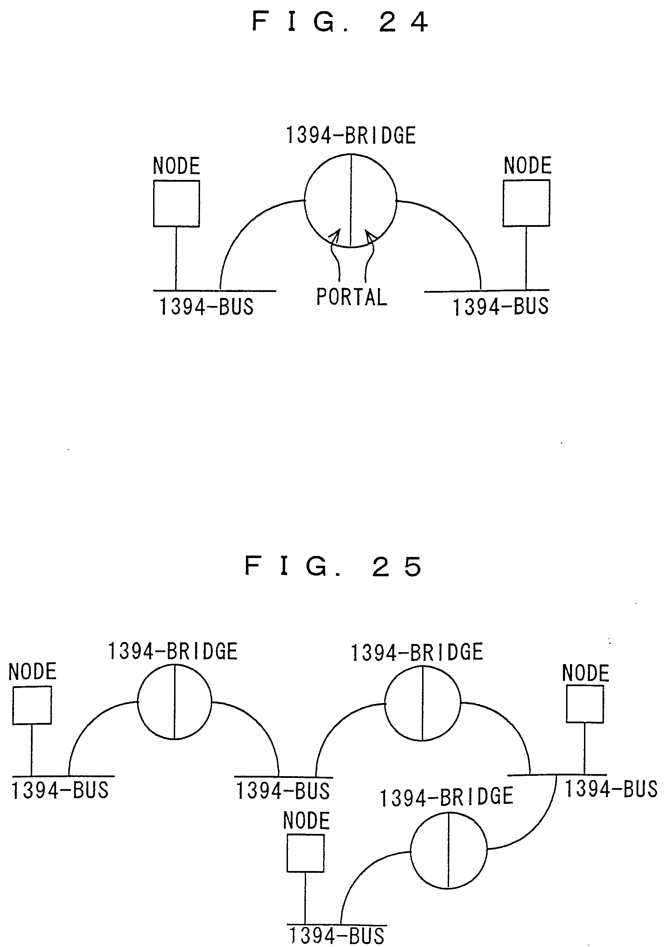

Fig. 20 is a diagram for further illustrating the relationship between the command and the response. A node A is connected with a node B via an IEEE 1394 bus. The node A is a controller, and the node B is a target. Each of the nodes A and B is provided with a command register and a response register each with 512 bytes. As shown in Fig. 20, the controller writes a command massage into a command register 93 in the target to give command thereto. Contrarily, the target writes a response message into a response register 92 in the controller to give response thereto. Between these two messages, control information is exchanged. The kind of the command set sent in the FCP is written in the CTS in the data field shown in Fig. 25 which will be described later.

Also, the IEEE1394 Standard defines, for interface devices, a 1394 Open Host Controller Interface (hereinafter abbreviated as 1394OHCI) for providing a common method for mounting including a register structure, a data structure, etc. This Standard defines therein also description as for a DMA (Direct Memory Access) unit and a host interface for high-speed transfer.

The 1390OHCI accommodates both an asynchronous transfer method called asynchronous transfer and a synchronous transfer method called isochronous transfer. The asynchronous transfer accommodates all the requests/responses defined by the IEEE1394 Standard, so that DMA transfer can be used to read data from the host memory for packet transmission and also to write data to the host memory for packet reception.

In isochronous transfer, a DMA controller is mounted for each of transmission and reception, thus enabling controlling from four channels up to 32 DMA channels.

Those DMA channels can be controlled by a context program. This context program is comprised of a plurality of descriptors stored in a memory by software so that DMA transfer may be performed according to the contents of these descriptors.

Also, a function of a cycle master is provided, which is defined in the IEEE1394 Standard. The 1394OHCI is mounted therein with a cycle timer and a counter, thus enabling transmitting a cycle start packet.

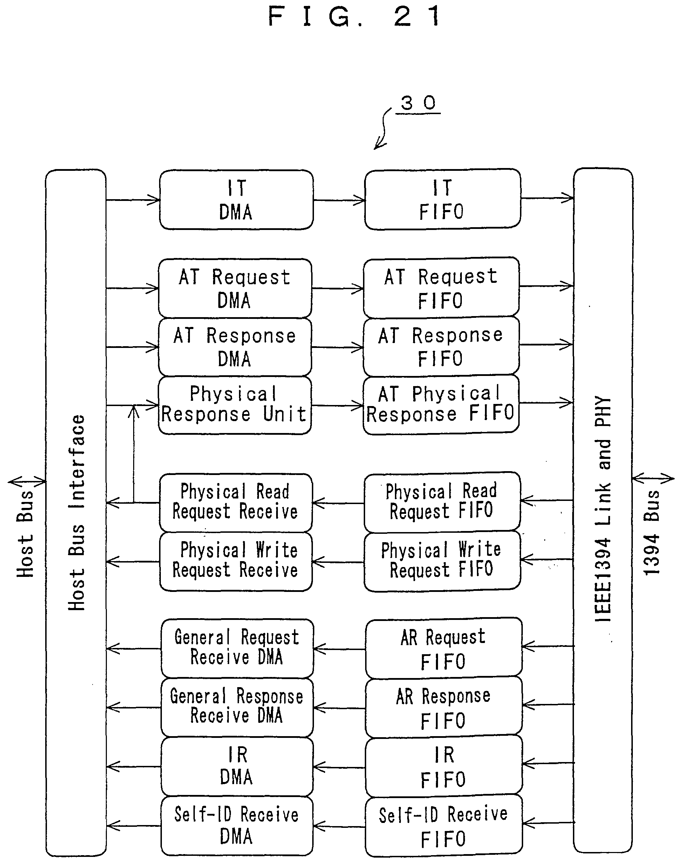

Fig. 21 shows a hardware configuration of the 1394OHCI. A 1394OHCI unit 30 comprises a first-in, first-out (FIFO) unit, a DMA controller unit for controlling DMA transfer, and a host bus interface unit, all of which are arranged in the physical layer and link layer (hereinafter called 1394 Link and PHY unit in combination) and the interface portion with the host bus in accordance with the IEEE1394 Standard. The FIFO unit is classified into many elements according to the types of packet data. The DMA controller unit is also provided with a plurality of DMA contexts in correspondence to the types of the FIFO unit, so that the context program may control the operations.

When asynchronous or isochronous data is received, the data packet received at the 1394Link and PHY unit is appropriately selected according to the type of the packet and then sent to the FIFO unit. The data thus sent to the FIFO is then transmitted via the corresponding DMA context of the host bus interface unit to the host bus interface to be transferred to the host bus.

Also, when asynchronous or isochronous data is transmitted, the data packet is transmitted via the host bus interface unit to the corresponding FIFO unit according to a DMA context corresponding to the type of the data packet and then transmitted from the 1394Link and PHY unit to the IEEE1394 bus in a packet.

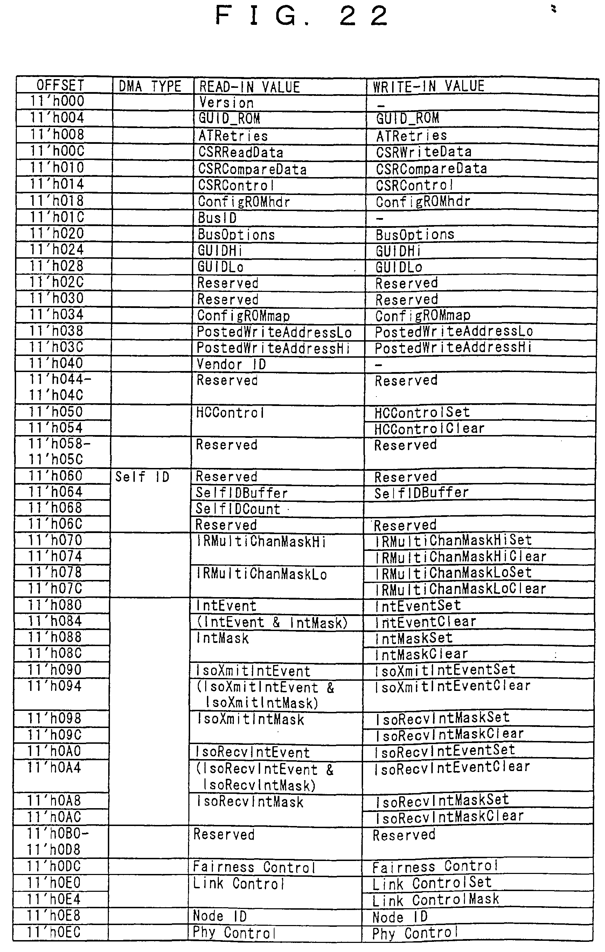

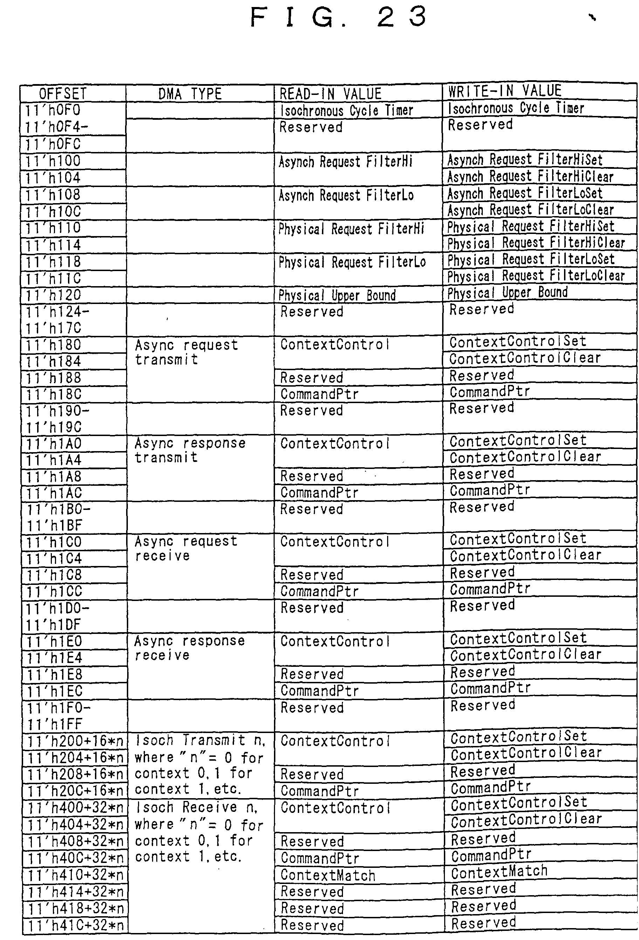

The register space defined in the 13940HCI is described as follows. Figs. 22 and 23 both show the register structure. By mapping a shown register in a space containing the host bus, an access can be made from the host bus. Although details are omitted, the register contents are roughly divided into a setting portion related to isochronous transfer, a setting portion related to asynchronous transfer, a setting portion related to interrupting, and other setting portions related to the IEEE1394 Standard.

Also, the IEEE1394 Standard in fact provides a variety of restrictions, in configuration of a network, on the scale and the easy-to-use feature in terms of the number of connectable apparatuses, the number of hops, and the transmission band. To relax those restrictions in order to expand the network scale, the 1394-bus bridge is being standardized presently.

A status control register employed by the IEEE1394 standard defines therein a 10-bit bus number and a 6-bit node number. The behavior of the 63 nodes in one bus represented by a node-number field is standardized in the IEEE1394 Standard. Also, a 10-bit bus number field is used to assign a number to this field, thus enabling expansion up to 1023 buses, for which the 1394 Bus Bridge Standard attempts to standardize the protocol for such a 1394-nework as a whole.

The 1394-bridge has a function to propagate data over a plurality of buses when it is present between the buses necessarily. The 1394-brigde comprises a pair of nodes, each of which is called portal. Each portal would perform processing for both a bus connected therewith and another bus connected with the other portal.

A 1394-network using such a 1394-bridge has such a configuration as shown in Fig. 24. A circle interconnecting the two buses represents the 1394-bridge, each semicircle of which represents each portal. As shown in Fig. 25 also, by sharing in use the inter-bus connections by use of the 1394-bridge, up to the Standard maximum number of 1023 buses can be interconnected.

The present specifications of the above-mentioned 1394OHCI accommodate only the IEEE1394 standard and do not take into account the requirements for a function of the 1394-bridge to act as a bridge portal.

Besides, the present specifications of the 1394OHCI define a "multi-isochronous reception mode" for receiving a plurality of channels of isochronous data in a batch but not a "multi-isochronous transmission mode" for transmitting a plurality of channels of isochronous data in a batch. That is, the specifications have not much taken into account the transmission of a plurality of channels of isochronous data.

Accordingly, to realize the function as a 1394-bridge portal using a 1394OHCI etc. in order to transfer a plurality of channels of isochronous data to a remote bus, the data must be transferred by use of a DMA context in as many times as the number of those channels, thus leading to a problem of an increase in the processing load.

Besides, to transfer received isochronous data to another bus, problematically the data once received must be treated so as to be transmitted because the contents of the reception data packet are different from those of the transmission data packet.

Various aspects and features of the present invention are defined in the appended claims.

The information processing apparatus related to the invention comprises a memory means which stores a plurality of channels of data in a mixed manner and which can be controlled by a single DMA channel, a channel specifying means for specifying a channel a transmission-destination channel of the plurality of channels, and a data outputting means for controlling the single DMA channel in order to cause the data of a channel specified by itself to be output from the memory means.

Embodiments of the present invention relate to information processing apparatus and bridges utilizing the same. More specifically, embodiments of the present invention relate to such information processing apparatus that control transmission of a plurality of channels of data with a single DMA channel, thus efficiently controlling a plurality of channels of data, for example, isochronous data. Embodiments relate also to such information processing apparatus that use a common data format both in reception and transmission during data transfer, thus providing efficient processing in transfer of, for example, isochronous data.

Embodiments of the invention can provide an information processing apparatus etc. that can efficiently process a plurality of channels of, e.g. isochronous data. Embodiments of the invention can also provide an information processing apparatus etc. that can efficiently perform processing in transfer of, e.g. isochronous data.

The method for processing information related to the invention comprises also a steps of storing in a mixed manner a plurality of channels of data in memory means which can be controlled by a single DMA channel, specifying a channel to which data is to be sent of the plurality of channels and outputting data of channel specified by the channel specifying step from the memory means under the control of the single DMA channel.

The information processing apparatus related to the invention comprises also a 1394 Open Host Controller Interface unit connected to the host bus, a memory means connected to the host bus which stores a plurality of channels of data in a mixed manner and which can be controlled by a single DMA channel of the above-mentioned interface unit, a physical layer unit connected to the IEEE1394 bus, and a link layer unit interposed between this physical layer unit and the above-mentioned interface unit. The above-mentioned interface unit also includes a channel specifying means for specifying a transmission-destination channel of the plurality of channels and a data outputting means for controlling the single DMA channel in order to cause the data of a channel specified by itself to be output from the memory means.

According to the present invention, to the host bus is connected, for example, the memory means which can be controlled by the single DMA channel of the 13940HCI unit, in which memory means a plurality of channels of, e.g. isochronous data is stored in a mixed manner. Also, for example, the channel specifying means of this interface unit specifies a transmission-destination channel of the plurality of channels. Data of a specified channel, to be sent, is actually output from the memory means under the control of, e.g., the single DMA channel of the interface unit. Thus, the transmission of data of a plurality of channels can be controlled by the single DMA channel, in order to efficiently process a plurality of channels of, e.g. isochronous data.

The information processing apparatus related to the present invention comprises also a packet receiving means for receiving a first transfer packet, a reception data preparing means for preparing reception data from the first transfer packet received by this packet receiving means, a transmission data preparing means for preparing transmission data having the same header information as the reception data prepared by this reception data preparing means from that reception data, and a packet transmitting means for preparing and transmitting a second transfer packet from the transmission data prepared by the transmission data preparing means.

The method for processing information related to the invention comprises also a steps of receiving a first transfer packet, preparing a reception data from the first transfer packet received by the packet receiving step, preparing a transmission data having the same header information as the reception data prepared by the reception data preparing step from the reception data and preparing a second transfer packet from the transmission data prepared by the transmission data preparing step and transmitting the second transfer packet.

Also, the bridge related to the present invention for interconnecting first and second buses comprises a packet receiving means for receiving a first transfer packet from the first bus, a reception data preparing means for preparing reception data from the first transfer packet received by this packet receiving means, a transmission data preparing means for preparing transmission data having the same header information as the reception data prepared by this reception data preparing means from that reception data, and a packet transmitting means for preparing and transmitting to the second bus a second transfer packet from the transmission data prepared by this transmission data preparing means.

The bridge related to the present invention for interconnecting first and second IEEE1394-buses comprises also a first bridge portal connected to the first IEEE1394-bus, a second bridge portal connected to the second IEEE1394-bus, in such a configuration that the first bridge portal includes a first physical layer connected to the first IEEE1394-bus, a first 13940HCI unit connected to the host bus, and a first link layer unit interposed between the first physical layer unit and the above-mentioned first interface unit, while the second bridge portal includes a second physical layer unit connected to the second IEEE1394-bus, a second 13940HCI unit connected to the host bus, and a second link layer unit interposed between the second physical layer unit and the above-mentioned second interface unit.

Thus, on the side of the first bridge portal, from a first transfer packet received by the first physical layer unit from the first IEEE1394-bus, reception data is prepared by the first link layer unit and then sent to the host bus via the above-mentioned first interface unit, while on the side of the second bridge portal, transmission data having the same header information as the reception data is transferred from the host bus via the interface unit to the link layer unit, which in turn prepares a second transfer packet from the transmission data and sends it to the second IEEE1394-bus via the second physical layer unit.

According to the present invention, the first physical layer unit of the first bridge portal receives from the first IEEE1394-bus the first transfer packet, for example, an isochronous data packet, which is then transferred to the first link layer unit. The first link layer unit in turn removes a header CRC and a data CRC from this first transfer packet or adds necessary information to it, thus preparing reception data. This reception data is so treated as to have the same header information as transmission data prepared by transmission data preparing means described later.

Also, the transmission data is sent from the host bus to the second bridge portal. This transmission data is prepared by the transmission data preparing means connected to the host bus. For example, reception data contains information required only at the time of reception, so that the transmission data preparing means deletes that information required only at the time of reception from that reception data, to thereby prepare transmission data. Thus, the reception data and the transmission data have the same header information.

This transmission data is transferred to the second link layer unit of the second bridge portal. The second link layer unit in turn adds a header CRC, a data CRC, etc. to this transmission data to thereby prepare a second transfer packet, which is then sent via the second physical layer unit to the second IEEE1394-bus.

Since the reception data and the transmission data are thus treated to have the same header information so as to provide a common data format, for example, in processing for obtaining transmission data from reception data, the transmission data can be obtained only by deleting the information required only at the time of reception from the reception data. This leads to more efficient processing in transfer of, for example, isochronous data.

The invention will now be described by way of example with reference to the accompanying drawings, throughout which like parts are referred to by like references, and in which:
Fig. 1 is a time chart for showing transfer of data according to the IEEE1394 standard;
Fig. 2 is a cross-sectional view of a cable provided for by the IEEE1394 Standard;
Fig. 3 is a block diagram for showing a configuration example of a network employing the IEEE1394 Standard;
Fig. 4 is an illustration for showing interface components and a protocol architecture in accordance with the IEEE1394 Standard;
Fig. 5 is an illustration for showing an asynchronous transfer packet;
Figs. 6A and 6B are illustration for explaining arbitration;
Fig. 7 is an illustration for showing an isochronous transfer packet;
Fig. 8 is an illustration for showing addressing in a CSR architecture;
Fig. 9 is an explanatory diagram showing exemplary position, name, and operation of the main CRS;
Fig. 10 is an explanatory diagram showing an exemplary general ROM format;
Fig. 11 is an explanatory diagram showing exemplary bus info block, root directory, and unit directory;
Fig. 12 is an explanatory diagram showing an exemplary structure of PCR;
Figs. 13A to 13D are explanatory diagrams showing exemplary structures of oMPR, oPCR, iMPR, and iPCR, respectively;
Fig. 14 is an explanatory diagram showing an exemplary relationship between a plug, a plug control register, and a transmission channel;
Fig. 15 is an explanatory diagram showing an exemplary data structure in a hierarchy of a descriptor;
Fig. 16 is an explanatory diagram showing an exemplary data format of a descriptor;
Fig. 17 is an explanatory diagram showing an exemplary generation ID of Fig. 16;
Fig. 18 is an explanatory diagram showing an exemplary list ID of Fig. 16;
Fig. 19 is an explanatory diagram showing a relationship between the command and the response of FCP;
Fig. 20 is an explanatory diagram showing the relationship between the command and the response of Fig. 19 in more detail;
Fig. 21 is a block diagram for showing a hardware configuration of a 13940HCI unit;
Fig. 22 is a table for showing a register structure in the 1394OHCI;
Fig. 23 is a continued table for showing the register structure in the 13940HCI;
Fig. 24 is a block diagram for showing a basic configuration of a 1394-network employing a 1394-bridge;
Fig. 25 is a block diagram for showing a configuration example of the 1394-network employing a plurality of 1394-bridges;
Fig. 26 is a block diagram for showing a configuration example of a 1394-network using a 1394-bridge;
Fig. 27 is a block diagram for showing a detailed configuration of the 1394-bridge;
Fig. 28 is an illustration for explaining an outline of processing in a DMA context;
Fig. 29 is an illustration for showing a format of a context control register for isochronous reception;
Fig. 30 is an illustration for showing a format (for multi-channel reception) of a channel mask register for isochronous reception;
Fig. 31 is an illustration for showing a format of a command pointer register for isochronous reception;
Fig. 32 is an illustration for showing a format of a descriptor for isochronous reception;
Fig.33 is an illustration for showing a flow of isochronous reception in a buffer-fill mode;
Fig. 34 is an illustration for showing a flow of isochronous reception in a packet-per-buffer mode;
Fig. 35 is an illustration for showing an isochronous reception data format;
Fig. 36 is an illustration for showing a format of an isochronous data packet;
Fig. 37 is an illustration for showing a format of a context control register for isochronous transmission;
Fig. 38 is an illustration for showing a format of a command pointer register for isochronous transmission;
Figs. 39A to 39C are illustration for showing a format of descriptors for isochronous transmission;
Fig. 40 is an illustration for showing an isochronous transmission data format;
Fig. 41 is an illustration for showing a newly defined isochronous reception data format;
Fig. 42 is an illustration for showing a newly defined format of an isochronous reception context control register;
Fig. 43 is an illustration for showing a newly defined format of an isochronous transmission context control register;
Fig. 44 is an illustration for showing a newly defined format (for multi-channel transmission) of an isochronous transmission channel mask register; and
Fig. 45 is an illustration for explaining an isochronous transfer example.

The following will describe embodiments of the invention with reference to the drawings.

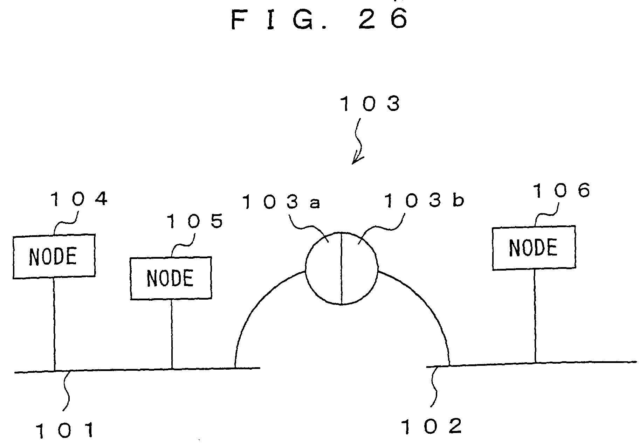

Fig. 26 shows a configuration example of a 1394-network using a 1394-bridge. This network comprises a 1394-bus 101(Bus #1), another 1394-bus 102(Bus #2), a 1394-bridge 103, nodes 104 and 105 connected to the 1394-bus 101, and a node 106 connected to the 1394-bus 102. In this configuration, the 1394-bridge 103 is comprised of a pair of two bridge portals 103a and 103b. Those bridge portals 103a and 103b each exist as a node in such a configuration that the bridge portal 103a is connected to the 1394-bus 101 and the bridge portal 103b, to the 1394-bus 102.

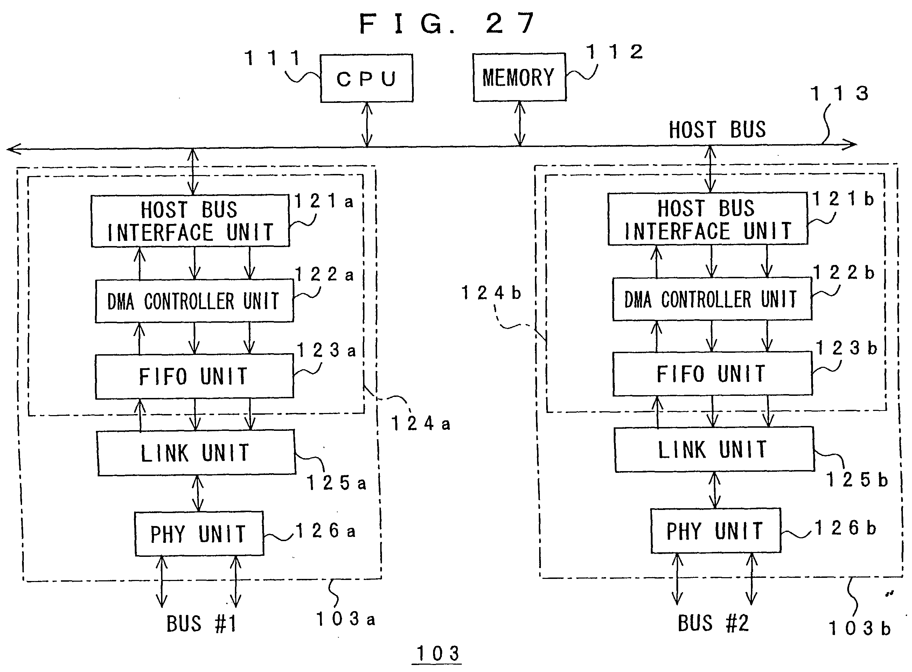

In this embodiment, the bridge portals 103a and 103b are each provided with an IEEE1394-digital serial data interface device using a 1394OHCI. Fig. 27 shows a detailed configuration of the 1394-bridge 103.

This 1394-bridge 103 comprises a controlling CPU (Central Processing Unit) 111, a memory 112, a host bus 113, the bridge portal 103a, and the bridge portal 103b.

The bridge portal 103a comprises a 1394OHCI unit 124a including a host bus interface unit 121a, a DMA controller unit 122a, and a FIFO unit 123a, a link layer (Link) unit 125a, and a physical layer (PHY) unit 126a. Likewise, the bridge portal 103b comprises a 13940HCI unit 124b including a host bus interface unit 121b, a DMA controller unit 122b, and a FIFO unit 123b, a link layer (Link) unit 125b, and a physical layer (PHY) unit 126b. The 13940HCI units 124a and 124b are supposed to have almost the same hardware configuration as that shown in Fig. 21 above.

As mentioned above, the 13940HCI is capable of isochronous transmission and reception. The following will describe a method of isochronous reception by the 1394OHCI.

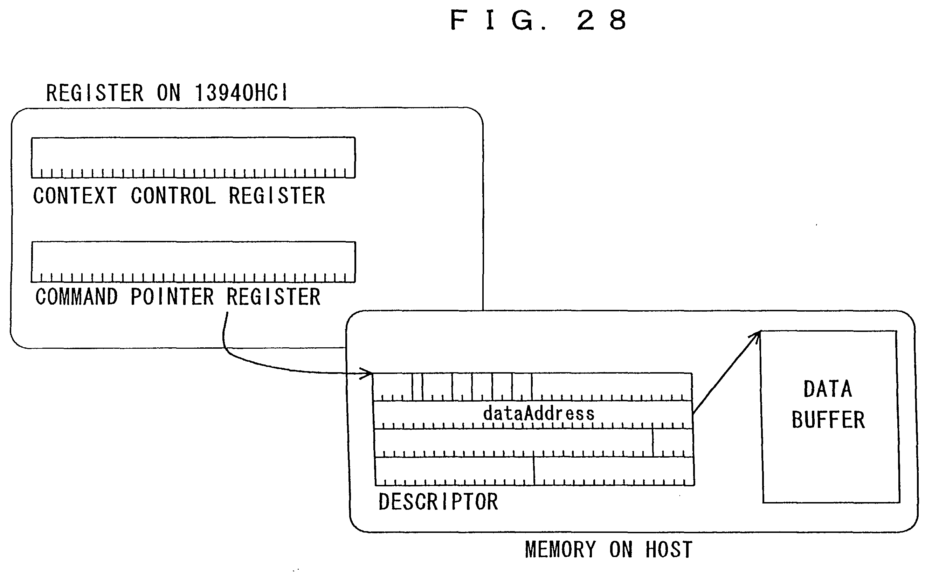

The 1394OHCI has therein a defined DMA context for isochronous reception, whereby the number of contexts ranges from four at the minimum to 32 at the maximum. The context program for controlling those contexts comprises an aggregate of descriptors, each of which sets therein an address of a reception buffer (data buffer) prepared by the host side. Also, the reception mode for a reception channel and the handling of reception start are conducted using a register for controlling the contexts which is provided on the 1394OHCI. The descriptor address prepared by the host side etc. are also set in the register. Fig. 28 shows an outline of the above-mentioned processing. The context control register is used for setting the turning ON/OFF of transmission and reception, setting the modes, etc. The command pointer register indicates a descriptor address on the host memory.

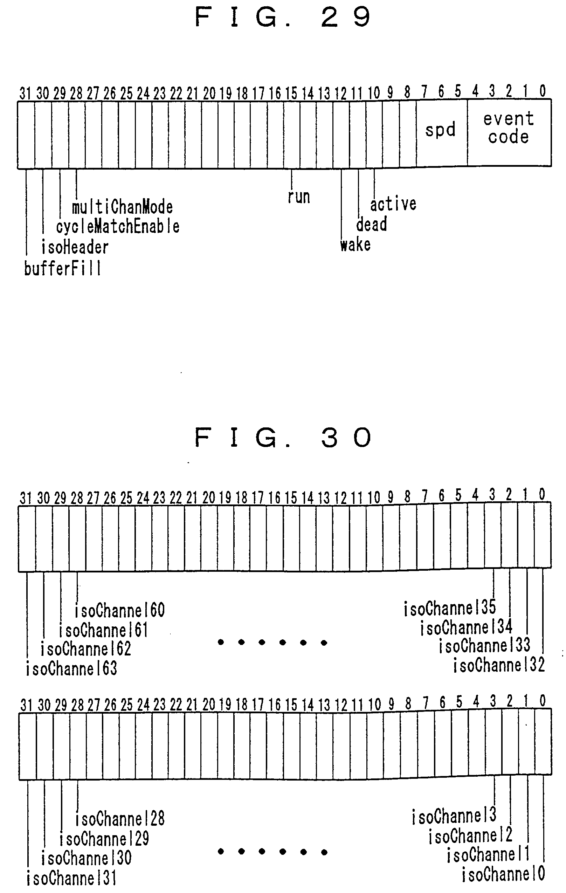

Fig. 29 shows a format of a context control register for use in isochronous reception. This register has bits for making a variety of reception settings and controlling the behavior. This register specifically has a buffer-fill bit (bufferFill), an iso-header bit (isoHeader), a cycle-match enable bit (cycleMatchEnable), a multi-channel bit (multiChanMode), a run bit (run), a wake bit (wake), a dead bit (dead), an active bit (activ), a speed field (spd), and an event-code field (event code).

The buffer-fill bit (bufferFill) is used for setting a method of reception. There are two reception methods of a "buffer-fill mode" wherein, irrespective of a data packet size, immediately after a specified buffer is filled, data is taken into the next buffer and a "packet-per-buffer mode" wherein each data packet received is taken into each buffer. When the buffer-fill bit is set at 1, the "buffer-fill mode" is activated in processing. This processing is detailed later.

The iso-header bit (isoHeader) is used for deciding processing related to an isochronous header at the time of reception. When this bit is set at 1, data including the isochronous header is taken into a reception buffer and when it it is set at 0, only the isochronous data is taken into the reception buffer.

The cycle-match enable bit (cycleMatchEnable) is used for specifying trigger conditions at the time of reception. When this bit is set at 1, isochronous data starts to be received from a specified cycle value of the cycle timer on the 1394-bus. When this bit is set at 0, on the other hand, data starts to be received directly from a reception start point in time.

The multi-channel bit (multiChanMode) is used for making setting to process a plurality of isochronous channels of data with one DMA context. In the usual mode, data is received using one DMA context for each isochronous channel. If this multi-channel bit is set at 1, the multi-channel mode is activated, in which a plurality of isochronous channels of data can be received at a time. In this case, the isochronous data pieces are stored in the same buffer in an order they have been received.

To use this mode, a channel at which data is to be received must be specified. This channel is specified using a channel mask register. A format of the channel mask register is shown in Fig. 30. When the bit corresponding to the isochronous bit in the register is set at 1, data of the corresponding channel can be received.

The run bit (run) is used for triggering reception start. When 1 is written to this bit from the software, the 13940HCI starts data reception under specified conditions.

The wake bit (wake) is used for activating a simple semaphore between hardware and software. During isochronous reception, it is necessary to add a buffer, as occasions demand, in which received data is to be stored. Although such a buffer is added by the software, a means is required which would notify the hardware of the addition. This role is played by this bit. The hardware, when it knows the wake bit has been set at 1, recognizes that a new buffer has been added and then performs necessary processing.

The dead bit (dead) is set by the hardware. This bit is set at 1 if reception is stopped due to any fault.

The active bit (activ) is also set by the hardware. This bit is held at 1 when isochronous reception is under way.

The speed field (spd) is used for indicating a reception speed of isochronous data received. The event code field (event code), set by the hardware, is used for posting the results of reception. Upon occurrence of an error etc., an error code corresponding to the type of the error is set in this field. Accordingly, the software can recognize the occurrence cause of the error by referring to that code.

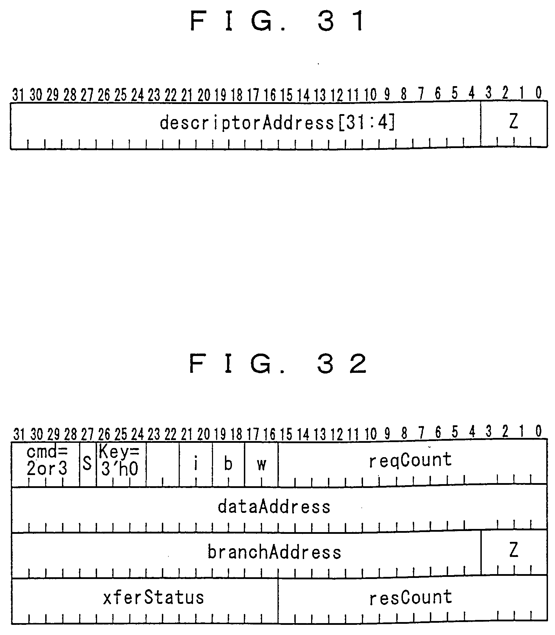

To conduct isochronous reception using a 1394OHCI, a descriptor is required for, for example, specifying a buffer in which received data is to be stored. Such a descriptor includes parameters required by the context program, such as a type of received data, and a specification of reception mode, an address of a buffer for storing received data. Such a descriptor is prepared by the software in such a way that by setting its top address to a command pointer register for isochronous reception as shown in Fig. 31, referencing is enabled from the side of the hardware.

Fig. 32 shows a format of such a descriptor. The detailed description of each field of this descriptor is omitted. The data address field of this descriptor has therein a setting of an address of a buffer which stores received data.

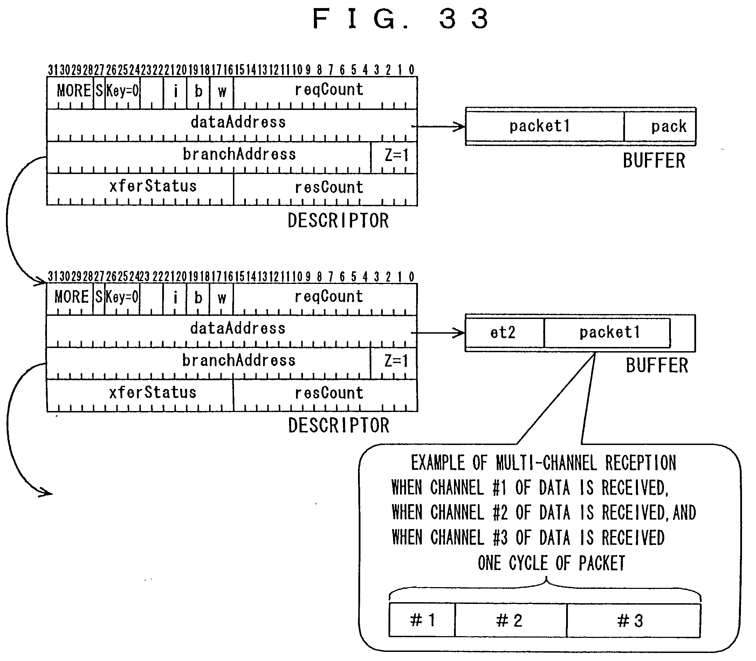

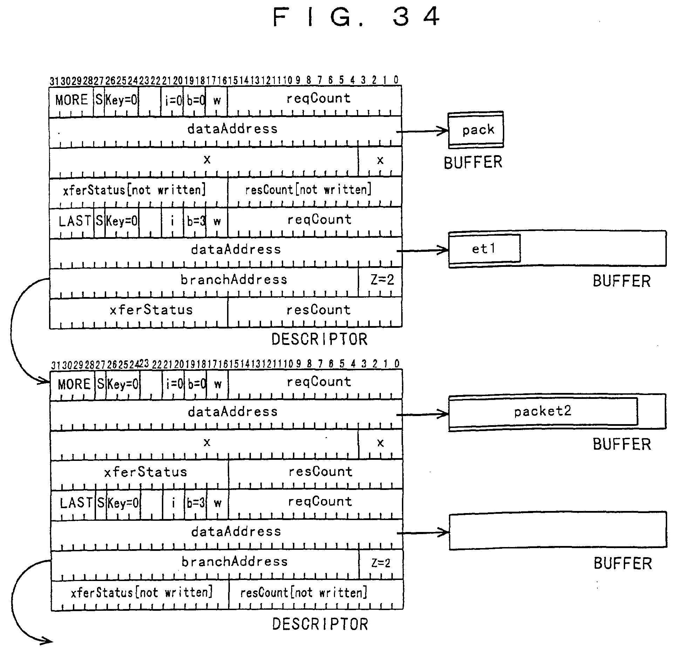

Also, as mentioned above, the isochronous reception may come in either of the two modes of the "buffer-fill mode" wherein when a specified buffer is filled, the data is taken into the next buffer and the "packet-per-buffer mode" wherein each data packet received is taken into each buffer, isochronous reception flows of which are shown in Figs. 33 and 34 respectively.

In the multi-channel mode, the "buffer-fill mode" is used of the above-mentioned two modes. As shown in Fig. 33, in the multi-channel mode, a plurality of channels of isochronous data is sequentially taken into buffers for each cycle.

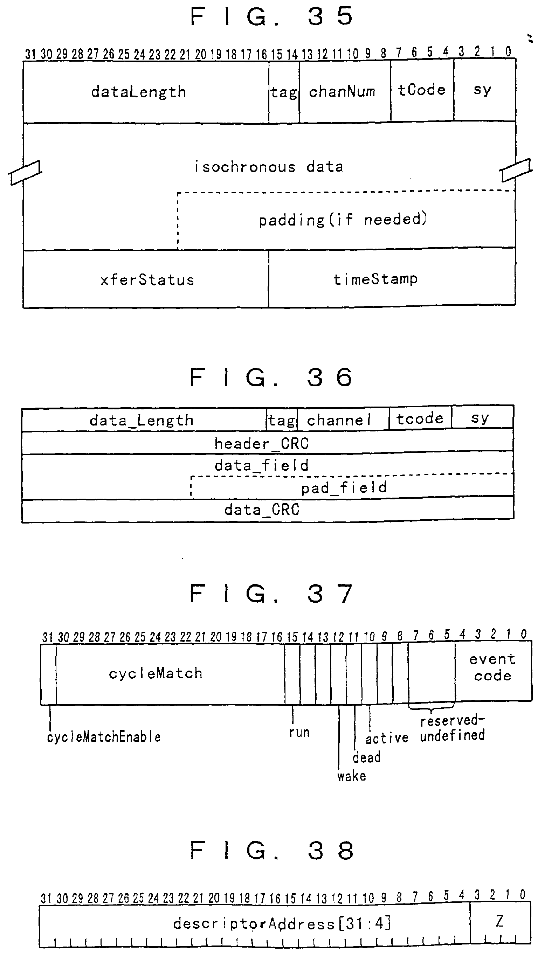

Fig. 35 shows a format of reception data for each channel which is taken into a buffer. This format is used in a case where data is taken in with an isochronous header attached thereto. This reception data comprises header information including a data length (dataLength), an isochronous data format tag, an isochronous channel (chanNum), and a transaction code (tCode) and synchronization code (sy), and isochronous data (isochronous data), reception-time information (timeStamp), and information indicating a reception state.

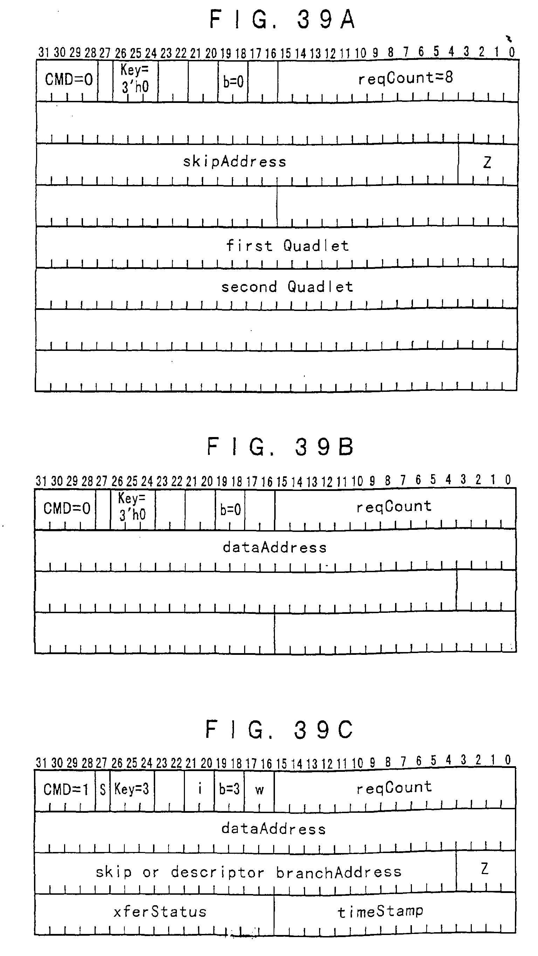

Of these, the data length (dataLength) indicates the length of isochronous data. If the isochronous data is not given in 4-byte units, padding (padding) is added. The padding has a value of 0. Fig. 36 shows a format of isochronous data packets transferred via the IEEE1394-bus. As apparent from it, the header information and the isochronous data shown in Fig. 35 are obtained by removing the header CRC and the data CRC from the isochronous packet shown in Fig. 36.

In the multi-channel mode, a format shown in Fig. 35 is always used. Besides, a case has also been defined where only isochronous data is received without taking in the isochronous header, the description of which is omitted here.

The following will describe a method of isochronous transmission in 1394OHCI. The 134OHCI has a DMA context defined therein for isochronous transmission, whereby the number of contexts ranges from four at the minimum to 32 at the maximum. The processing of such a form as shown in Fig. 28 is performed by almost the same method as that for isochronous reception described above.

Fig. 37 shows a format of a context control register for use in isochronous transmission. This register includes bits for making a variety of settings for transmission and for controlling the behavior. This register is provided with a cycle match enable bit (cycleMatchEnable) and a cycle match field (cycleMatch), thus enabling controlling transmission start timing. When the cycle match enable bit is set at 1, transmission starts from a cycle timing point set in the cycle match field. If the cycle match enable bit is set at 0 on the other hand, transmission starts at a point in time when the above-mentioned start operations is performed. The description of the other parameters are omitted here because they have been explained with the above-mentioned isochronous transmission context control register (see Fig. 29).

To conduct isochronous transmission using a 1394OHCI, a descriptor is required for specifying a buffer in which transmission data is stored. This descriptor includes parameters required by the context program, such as a type of transmission data, specification of a transmission mode, and an address of a buffer in which transmission data is stored. This descriptor is prepared by the software in such a way that by setting its top address at the command pointer register for. isochronous transmission as shown in Fig. 38, reference is enabled from the side of the hardware.

Figs. 39A to 39C show formats of the descriptors used. Fig. 39A shows a descriptor for indicating an isochronous header, Fig. 39B indicates a descriptor for indicating an isochronous data piece, and Fig. 39C indicates the end of the isochronous data piece, which descriptors are all positioned in physically continuous spaces. The detailed description of each field of those descriptors are omitted in description. The contents set in the data address field of those descriptors provide the address of a buffer in which the transmission data is stored.

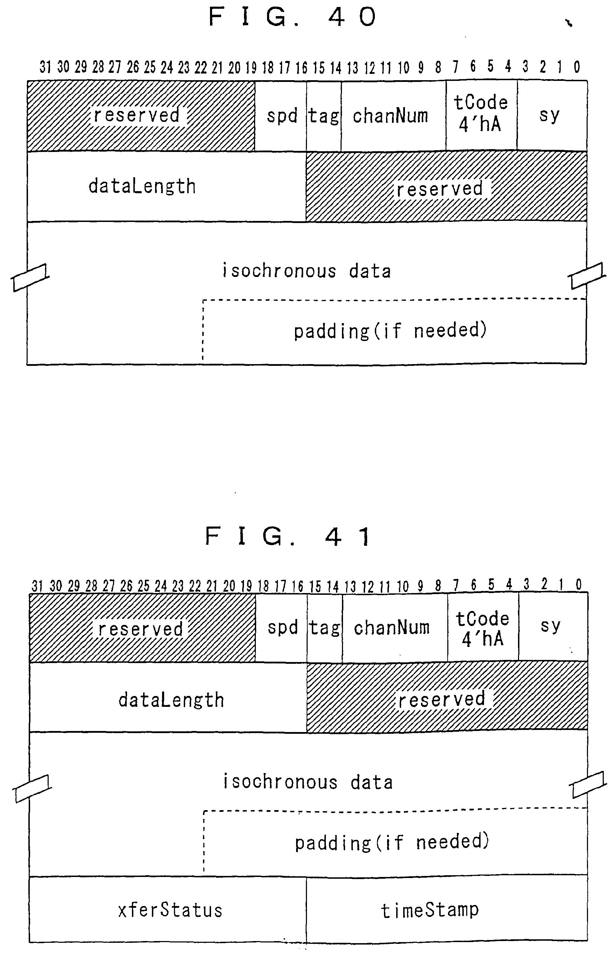

Fig. 40 shows a format of each channel of transmission data stored in a buffer. This transmission data comprises header information including a data length (dataLength), an isochronous data format tag (tag), an isochronous channel (chanNum), a transaction code (tCode), a synchronization code (sy), and a speed (spd) and isochronous data (isochronous data).

Of these, the data length (dataLength) indicates the length of isochronous data. If the isochronous data is not given in 4-byte units, padding (padding) is added. The padding has a value of 0.

If the specifications of the above-mentioned isochronous transmission/reception method with the 1394OHCI are used to transfer a plurality of channels of isochronous data via a 1394-bridge, processing must be conducted for each of these isochronous channels both in transmission and reception because the multi-channel mode for transmission is not defined. Accordingly, a DMA context must be processed as many times as the number of the isochronous channels, thus increasing the DMA processing load.

To guard against this, the invention would define a novel isochronous transmission mode. As for data formats, the invention would provide a common data format both in transmission and reception, thus reducing the software load.

First, in the 13940HCI, the data format is expanded both in isochronous transmission and reception. In the prior art reception data format, such as shown in Fig. 35, there has been no field provided for specifying a speed required in a transmission data format.

Fig. 41 shows a newly defined isochronous reception data format. This data format is provided with a speed field (spd) for indicating a speed employed, having the same header information as the transmission data format shown in Fig. 40. The other fields are the same as those of the prior art reception data format.

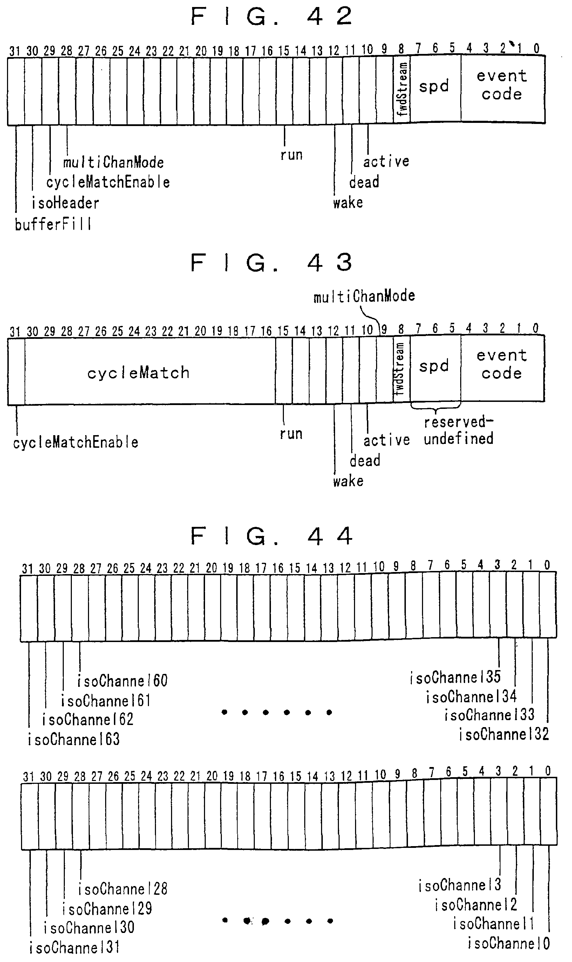

Fig. 42, on the other hand, shows a newly defined format of an isochronous reception context control register. This format is provided with a forward stream bit (fwdStream). When this bit is set at 1, the received isochronous data is forwarded to other buses, so that reception is to be conducted using the above-mentioned data format shown in Fig. 41. This forward stream bit (fwdStream) enables discriminating this type of reception from the usual type of reception. The other fields of Fig. 42 are the same as those of the prior art format (see Fig. 29).

Note here that, as shown in Fig. 41, in isochronous reception data, time information at the time of reception (timeStamp) and information indicating a reception state (xferStatus) are added. Those information pieces are required only in reception and not for isochronous transmission data (see Fig. 40). Thus, the isochronous reception data does not match with the isochronous transmission data in that the former contains the time information at the time of reception (simteStamp) and the information indicating the reception state (xferStatus).

Accordingly, in the present embodiment, one quadlet to which the time information at the time of reception (timeStamp) and the information indicating the reception state (xferStatus) have been added is skipped (removed) to thereby prepare isochronous transmission data. To enable conducting this operation for transmission, the format of the isochronous transmission context control register is expanded.

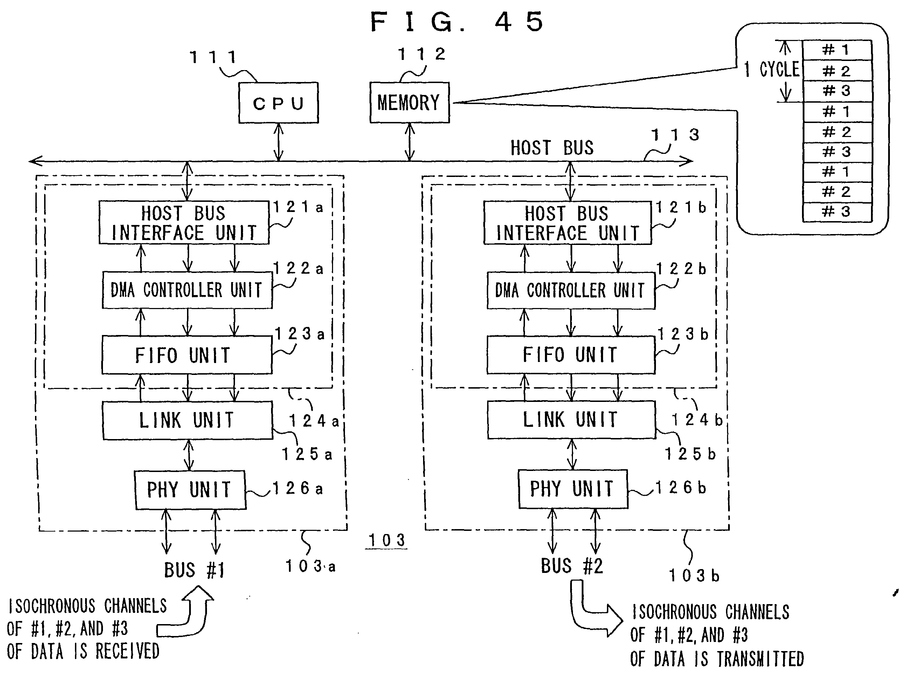

Fig. 43 shows a newly defined format of the isochronous reception context control register. This format is provided with a forward stream bit (fwdStream). When this bit is set at 1, isochronous transmission data is processed as data received from another bus. That is, the data to be transmitted is recognized to have the configuration shown in Fig. 41, skipping the one quadlet to which the time information at the time of reception (timeStamp) and the information indicating the reception state (xferStatus) have been added.

Thus, by providing a common data format both on the transmission side and the reception side, isochronous data can be transferred over a plurality of buses without treating the data contents by software. Although the above-mentioned embodiment has incorporated a data skipping hardware function, actually, the completely same format may be used both in transmission and reception to thereby eliminate any treatment on the data.

Also, the context control register format shown in Fig. 43 is provided with the multi-channel mode bit (multiChanMode). The other fields are the same as those of the prior art format (see Fig. 37). When this multi-channel mode bit is set at 1, isochronous transmission is conducted assuming that a plurality of isochronous channel of data is involved. That is, it is possible to transmit a plurality of channels of data using one DMA context.

Also, to use this multi-channel mode, a channel to which data is to be transmitted must be specified. Accordingly, a format of a transmission channel mask register is to be defined. Fig. 44 shows the channel mask register format. By setting at 1 the bit corresponding to an isochronous channel in the register, data can be transmitted to that channel.

The following will describe how to forward an isochronous data packet over a 1394-network shown in Fig. 26 from the 1394-bus 101 (Bus #1) to the 1394-bus (Bus #2), with reference to Fig. 45.

First, the bridge portal 103a receives an isochronous data packet from Bus #1 (see Fig. 36). In this case, the isochronous data packet received at the physical layer (PHY) unit 126a is transferred to the link layer (Link) unit 125a. Then, according to the 1394OHCI specifications, the reception data is transferred to and stored in the memory 112 via the FIFO unit 123a, the DMA controller unit 122a, and the host bus interface unit 121a which constitute the 1394OHCI unit 124a. In this case, if the forward stream bit (fwdStream) of the isochronous reception context control register (see Fig. 42) is set at 1, the reception data of each isochronous channel to be stored in the memory 112 has the format shown in Fig. 41.

This example assumes a case where three isochronous channels of #1, #2, and #3 of data is transmitted. If, in this case, the multi-channel bit (multiChanMode) of the isochronous reception context control register (see Fig. 42) is set at 1 to activate the multi-channel mode, each channel of reception data is taken into the memory 112 for each cycle as shown in Fig. 45. In this case, one DMA context is operated. Accordingly, by operating only one DMA channel of the 1394OHCI unit 124a, a plurality of channels of isochronous data can be received

Next, the isochronous data stored in the memory 112 is processed by the controlling CPU so that it may be transferred to Bus #2, thus preparing transmission data. If, in this case, the forward stream bit (fwdStream) of the isochronous transmission context control register (see Fig. 43) is set at 1, the CPU 111 can recognize that data to be transmitted (transmission data) of each isochronous channel stored in the memory 112 is given in a format shown in Fig. 41.

In this case, from the data to be transmitted of each channel stored in the memory 112, one quadlet to which the time information at the time of reception (timeStamp) and the information indicating the reception state (xferStatus) have been added is skipped to thereby prepare transmission data of each isochronous channel easily (see Fig. 40).

Thus prepared transmission of each channel is transferred according to the 1394OHCI specifications to the link layer (Link) unit 125b via the host bus interface unit 121b, the DMA controller unit 122b, and the FIFO unit 123b which constitute the 1394OHCI unit 124b.

If, in this case, the multi-channel mode bit it (multiChanMode) of the isochronous transmission context control register (see Fig. 43) has been set at 1 to activate the multi-channel mode, the data is recognized to be of a plurality of isochronous channels and is then processed for isochronous transmission. In this case, one DMA context is operated. Accordingly, by operating only one of the DMA channels of the 13940HCI unit 124b, a plurality of channels of isochronous data can be transmitted.

Also, at the link layer (Link) unit 125b to which each channel of transmission data (see Fig. 40) is transferred from the 13940HCI 124b, an isochronous data packet (see Fig. 36) is generated based on thus transferred transmission data. Then, the isochronous data packet generated at this link layer (Link) unit 125b is transmitted via the physical layer (PHY) 126b to the 1394-bus (Bus #2) 102.

Thus, in this embodiment, by setting at 1 the multi-channel mode bit (multiChanMode) of the isochronous transmission context control register (see Fig. 43), the multi-channel mode can be entered. Then, by operating only one DMA channel of the 13940HCI unit 124b, a plurality of channels of isochronous data can be transmitted, thus improving the efficiency of the processing of a plurality of channels of isochronous data.

Also, in this embodiment, by setting the forward stream bit (fwdStream) of the isochronous reception context control register (see Fig. 42) at 1, each isochronous channel of reception data to be stored in the memory 112 can be given in a common format so as to have the same header information as transmission data (see Figs. 41 and 42).

In this case, since the forward stream bit (fwdStream) of the isochronous transmission context control register (see Fig. 43) has been set at 1, the CPU111 can skip one quadlet to which the time information at the time of reception (timeStamp) and the information indicating the reception status (xferStatus) have been added from the data of each channel to be transmitted stored in the memory 112, thus easily preparing transmission data of each isochronous channel. This leads to more efficient processing in transfer of isochronous data.

By the invention, a plurality of channels of data can be controlled by a single DMA channel, thus efficiently processing a plurality of channels of, e.g. isochronous data. By the invention, also, it is possible to provide a common data format both in transmission and reception during data transfer, thus improving the efficiency of processing of, e.g. isochronous data.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Various further aspects and features of the present invention are defined in the appended claims. Combinations of features from the dependent claims may be combined with features of the independent claims as appropriate and not merely as explicitly set out in the claims.

## Claims

1. An information processing apparatus comprising:
memory means which can be controlled by a single DMA channel, for storing a plurality of channels of data in a mixed manner;
channel specifying means for specifying a channel to which data is to be sent of said plurality of channels; and
data outputting means for outputting data of a channel specified by said channel specifying means from said memory means under the control of said single DMA channel.

2. An information processing apparatus comprising:
a 13940HCI (Open Host Controller Interface) unit connected to a host bus;
memory means which is connected to said host but and which can be controlled by a single DMA channel of said interface unit, for storing a plurality of channels of data in a mixed manner;
a physical layer unit connected to an IEEE1394-bus; and
a link layer unit interposed between said physical layer unit and said interface unit,
wherein said interface unit it includes:
channel specifying means for specifying a channel to which data is to be sent of said plurality of channels; and
data outputting means for outputting data of a channel specified by said channel specifying means from said memory means under the control of said single DMA channel.

3. The information processing apparatus according to Claim 2, wherein:
said host controller interface unit is a 13940HCI unit; and
said bus is an IEEE1394-bus.

4. An information processing apparatus comprising:
packet receiving means for receiving a first transfer packet;
reception data preparing means for preparing reception data from said first transfer packet received by said packet receiving means;
transmission data preparing means for preparing transmission data having the same header information as said reception data prepared by said reception data preparing means from said reception data; and
packet transmitting means for preparing and transmitting a second transfer packet from said transmission data prepared by said transmission data preparing means.

5. The information processing apparatus according to Claim 4, wherein:
said reception data contains information necessary only at the time of reception; and
said transmission data preparing means deletes said information necessary only at the time of reception from said reception data to thereby prepare said transmission data.

6. The information processing apparatus according to Claim 5, wherein said information necessary only at the time of reception is time information at the time of reception.

7. The information processing apparatus according to Claim 5, wherein said information necessary only at the time of reception is information indicating the reception state.

8. The information processing apparatus according to Claim 4, further comprising means for instructing that a head of said reception data should match with a head of said transmission data.

9. The information processing apparatus according to Claim 4, further comprising means for indicating that a head of said reception data matches with a head of said transmission data.

10. A bridge for interconnecting a first bus and a second bus, comprising:
packet receiving means for receiving a first transfer packet from said first bus;
reception data preparing means for preparing reception data from said first transfer packet received by said packet receiving means;
transmission data preparing means for preparing transmission data having the same header information as said reception data prepared by said reception data preparing means from said reception data; and
packet transmitting means for preparing a second transfer packet from said transmission data prepared by said transmission data preparing means and transmitting said second transfer packet to said second bus.

11. A bridge having a first bridge portal connected to a first IEEE1394-bus and a second bridge portal connected to a second IEEE1394-bus, for interconnecting said first IEEE1394-bus and said second IEEE1394-bus, wherein
said first bridge portal comprises a first physical layer unit connected to said first IEEE1394-bus, a first 1394OHCI unit connected to a host bus, and a first link layer unit interposed between said physical layer unit and said first interface unit;
said second bridge portal comprises a second physical layer unit connected to said second IEEE1394-bus, a second 1394OHCI unit connected to said host bus, and a second link layer unit interposed between said second physical layer unit and said second interface unit;
the side of said first bridge portal prepares reception data at said first link layer unit from a first transfer packet received by said first physical layer unit from said first IEEE1394-bus and then sends said reception data via said first interface unit to said host bus; and
the side of said second bridge portal transfers transmission data having the same header as said reception data via said second interface unit from said host bus to said link layer unit, prepares a second transfer packet from said transmission data at said link layer unit, and sends said second transfer packet via said second physical layer unit to said second IEEE1394-bus.

12. The bridge according to Claim 11, wherein:
said first bus and said second bus are in accordance with the IEEE1394 Standard; and
said first host controller interface unit and said second host controller interface unit are a 1394OHCI unit.

13. The bridge according to Claim 11, further comprising transmission preparing means connected to said host bus, for preparing said transmission data from said reception data.

14. A method for processing information comprising the steps of:
storing in a mixed manner a plurality of channels of data in memory means which can be controlled by a single DMA channel;
specifying a channel to which data is to be sent of said plurality of channels; and
outputting data of channel specified by said channel specifying step from said memory means under the control of said single DMA channel.

15. A method for processing information comprising the steps of:
receiving a first transfer packet;
preparing reception data from said first transfer packet received by said packet receiving step;
preparing transmission data having the same header information as said reception data prepared by said reception data preparing step from said reception data; and
preparing a second transfer packet from said transmission data prepared by said transmission data preparing step and transmitting said second transfer packet.
